(19) Europäisches Patentamt
European Patent Office
Office européen des brevets

(11) Publication number: 0 242 646 A1

(12) **EUROPEAN PATENT APPLICATION**

(21) Application number: 87104781.7

(51) Int. Cl.4: C04B 24/32 , C04B 24/02

(22) Date of filing: 01.04.87

(30) Priority: 17.04.86 JP 89338/86
29.05.86 JP 124979/86

(43) Date of publication of application:
28.10.87 Bulletin 87/44

(84) Designated Contracting States:
DE FR GB

(71) Applicant: Fujisawa Pharmaceutical Co., Ltd.
3, Doshomachi 4-chome Higashi-ku
Osaka-shi, Osaka 541(JP)

Applicant: TAKENAKA KOMUTEN CO. LTD.
27, 4-chome, Honmachi Higashi-ku
Osaka-shi Osaka 541(JP)

Applicant: Nippon Nyukazai Co., Ltd.
9-19, Ginza 3-chome Chuo-ku
Tokyo-to(JP)

(72) Inventor: Sakuta, Masaharu
1-1-26-306, Seishincho, Edogawa-ku
Tokyo-to(JP)
Inventor: Urano, Toshiharu
1-16-9, Yanagihara, Kita-ku
Nagoya-shi(JP)
Inventor: Tanaka, Kyoichi
5-6-1, Matsushiro, Yatabemachi
Tsukuba-gun, Ibaraki-ken(JP)
Inventor: Sugiyama, Masashi
2-1, Tokodai 3-chome, Toyosatomachi
Tsukuba-gun, Ibaraki-ken(JP)
Inventor: Endoh, Shyuzo
6-57-15, Minamisenju, Arakawa-ku
Tokyo-to(JP)
Inventor: Fujioka, Keisuke
3-4-7, Miyamaedaira Miyamae-ku
Kawasaki-shi(JP)

(74) Representative: Türk, Gille, Hrabal et al
Bruckner Strasse 20
D-4000 Düsseldorf 13(DE)

(54) **A durability improving agent for cement compositions and a method for improving durability of cement compositions.**

(57) Durability-improving agent for hydraulic cement compositions which comprises one or more of the compounds of the general formula:

EP 0 242 646 A1

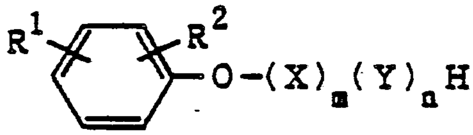

(I)

wherein $R^1$ and $R^2$ each independently is a hydrogen atom or an alkyl group, X is a group of the formula $-CH_2CH_2O-$, Y is a group of the formula $-CH_2CH(CH_3)O-$or a group of the formula $-CH(CH_3)CH_2O-$, m is an integer of 0 or 1-4, n is an integer of not less than 1, the sum m + n is an integer of 1-30, and X and Y are arranged in an optional order; hydraulic cement compositions comprising a compound of formula (I);method for improving hydraulic cement compositions by incorporating a compound of formula (I); use of a compound of formula (I); as durability-improving agent, carbonation inhibitor and/or freeze-thaw durablity-improving agent for the preparation of cement compositions; and process for preparing hydraulic cement compositions by incorporating a compound of the formula (I).

# A DURABILITY IMPROVING AGENT FOR CEMENT COMPOSITIONS AND A METHOD FOR IMPROVING DURABILITY OF CEMENT COMPOSITIONS

This invention relates to a durability-improving agent for cement compositions. More particularly, this invention relates to a durability-improving agent for cement compositions comprising the compound (I) defined below and to a method for improving durability of cement compositions comprising incorporating the compound (I) into a cement composition, and to a use of the compound (I) as a durability-improving agent for a preparation of cement compositions.

The service life of reinforced concrete structures has been estimated at about 50 to 60 years. This service life is generally dependent, among others, on the process of carbonation of concrete from the concrete surface. While the cement paste in concrete shows a strong basicity of pH 12-13 mainly due to the presence of calcium hydroxide and alkali metal hydroxides (sodium hydroxide, potassium hydroxide, etc.), calcium hydroxide is readily carbonated upon contact with carbon dioxide gas in the presence of water. Once the carbonation region has reached the level of reinforcing steel, the reinforcing steel rusts easily and, as a result, the reinforced concrete structures lose their structural safety. In addition, as another factor impairing the durability of reinforced concrete structures, there may be mentioned the invasion into concrete of substances capable of causing or inducing corrosion of iron, such as salts and acids, which leads to corrosion of steel reinforcements. The measures so far taken to improve the durability of reinforced concrete structures and thereby prolong the service life of reinforced concrete structures include, among others:

(I) Increasing the thickness of the cover of concrete for reinforcing steel;

(2) Reducing the water-cement ratio in concrete;

(3) Providing the concrete surface with a highly air-tight finishing materials; and

(4) Using ethylene, vinylacetate and vinylchloride copolymer emulsion as a carbonation inhibitor (cf. Japanese Kokai Tokkyo Koho 60-I0306I).

These known measures are indeed effective in preventing significant deterioration of concrete but are not so effective in prolonging the service life of reinforced concrete to any substantial extent.

In particular, the use of a finishing material for preventing carbonation, though effective on a short-term basis, still has a problem in that it cannot be said to constitute a highly reliable method since the durability of the finishing material itself is a problem.

Further, exposure of hydraulic cement products such as concrete, mortar, etc. to weathers means that they are subjected to freeze-thaw cycles due to alternating high and low temperatures, which results in the formation of fine internal cracks in the hydraulic cement products such as concrete, mortar and the like. Application of such cracks lead to a breakdown of the hydraulic cement products.

In order to prevent the loss of durability of hardened hydraulic cement products due to freeze-thaw, it has been common practice to use air-entraining (AE) agents adapted to entrain fine air voids into the hardened hydraulic cement product to releave and absorb the pressure of expansion at freezing [See, for example, Concrete Engineering Handbook, Asakura-Shoten K.K., I98I Edition, pp. I39-I43].

However, as any air-entraining agent liberates a large number of air voids within the hardened hydraulic cement product, the drying shrinkage, water permeability and the rate of carbonation of, say, concrete are increased, to mention only a few of the problems, with the result that the durability of, say, steel-reinforced concrete structures are adversely affected.

To solve the above various problems causing the loss of durability of hardened cement compositions, the present inventors conducted intensive investigations and, as a result, found that the compounds of the general formula (I) as defined below, when added to cement compositions, can inhibit the carbonation of hardened cement compositions and at the same time can reduce the permeation of water into hardened cement composition and furthermore inhibit the invasion of chloride ion, whereby the durability of hardened cements can be improved and the service life of hardened cement compositions can be substantially prolonged. Further, the addition of a compound of general formula (I) to a cement composition results in an improved freeze-thaw durability of the cement composition.

A compound to be used as a durability-improving agent in this invention is represented by the general formula (I):

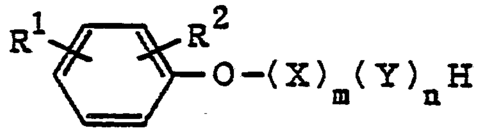
(I)

wherein $R^1$ and $R^2$ each independently is a hydrogen atom or an alkyl group, X is a group of the formula $-CH_2CH_2O-$, Y is a group of the formula $-CH_2CH(CH_3)O-$ or a group of the formula $-CH(CH_3)CH_2O-$, m is an integer of 0 or 1-4, n is an integer of not less than 1, the sum m + n is an integer of 1-30, and X and Y are arranged in an optional order.

Referring to the general formula (I), preferred examples of the alkyl group represented by R are methyl, ethyl, n-propyl, isopropyl, n-butyl, isobutyl, tertiary-butyl, n-pentyl, isopentyl, hexyl, heptyl, octyl, nonyl, decyl, dodecyl, etc. Among these, those alkyl groups that contain I-I2 carbon atoms are preferable and those alkyl groups that contain I-9 carbon atoms are particularly preferable.

Referring to the general formula (I), X, which represents a group of the formula $-CH_2CH_2O-$, and Y, which represents a group of the formula $-CH_2CH(CH_3)O-$ or a group of the formula $-CH(CH_3)CH_2O-$, are arranged in an optional order. Thus, the moiety $-(X)_m(Y)_n$ is the residue of an ethylene oxide-or propylene oxide-derived addend or an ethylene oxide or propylene oxide homopolymer or ethylene oxide-propylene oxide block or random copolymer addend.

As mentioned hereinabove, in the above general formula (I), m is an integer of 0 or I-4, n is an integer not less than 1 and m + n is an integer of I-30. Preferably, n is an integer I to I0, and m + n is an integer 1 to I0. Those compounds in which m + n exceeds 30 are not preferable since they rather decrease the strength of hardened cements.

The compounds of the above general formula (I) are known compounds obtainable, for example by reacting phenol or an alkylphenol with ethylene oxide and/or propylene oxide monomer or (co)polymer. And some compounds of the general formula (I) are known as a drying-shrinkage reducer of the cement composition (See, for example, Japanese Kokai Tokkyo Koho 59-232952).

Typical examples of the compounds of the above general formula (I) and production examples therefor are given below:

| Compounds No. | Structural formula |
| --- | --- |
| 1: | 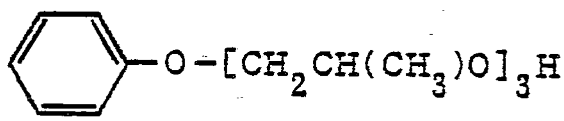 |
| 2: | 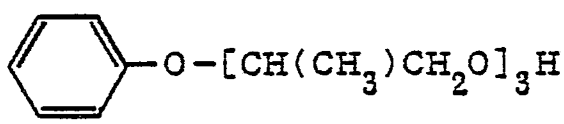 |
| 3: | 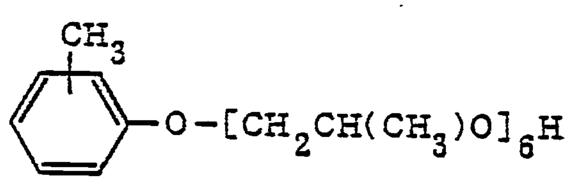 |

[The methyl group on the phenyl group is in meta and para positions (60:40)]

4: 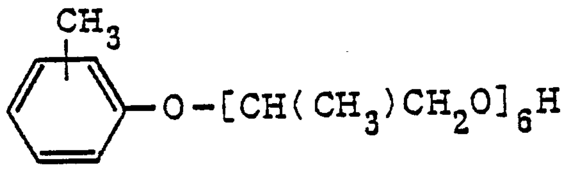

[The methyl group on the phenyl group is in meta and para positions (60:40)]

5: 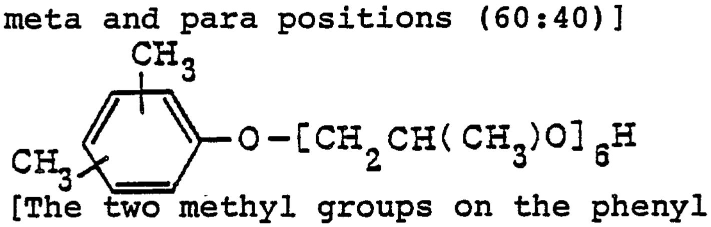

[The two methyl groups on the phenyl group are in 2,4-, 2,5- and 3,5-positions (1:1:1)]

6: 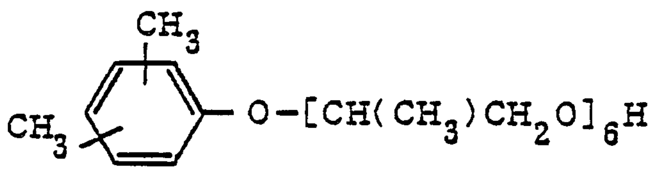

[The two methyl groups on the phenyl group are in 2,4-, 2,5- and 3,5-positions (1:1:1)]

7: 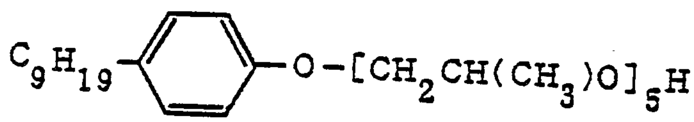

8: 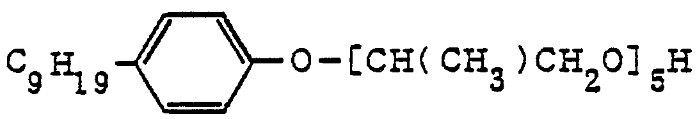

9: 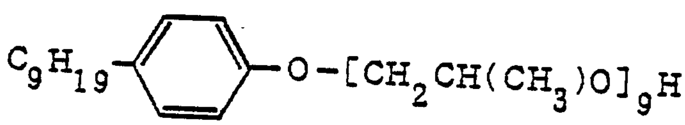

10: 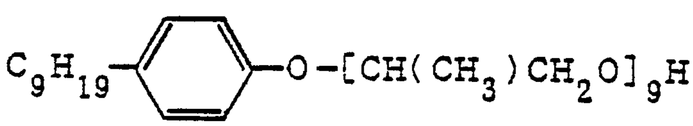

11:

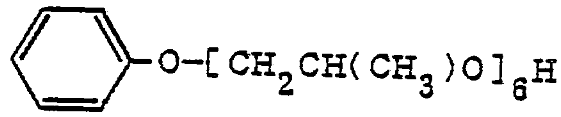

12:

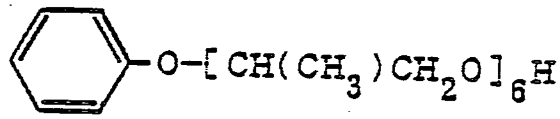

13:

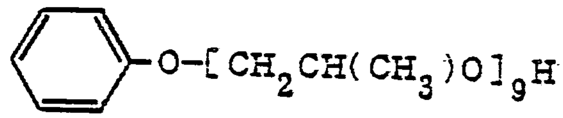

14:

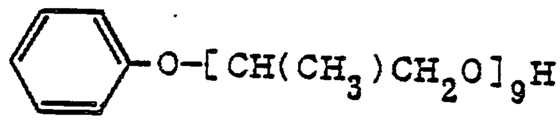

15:

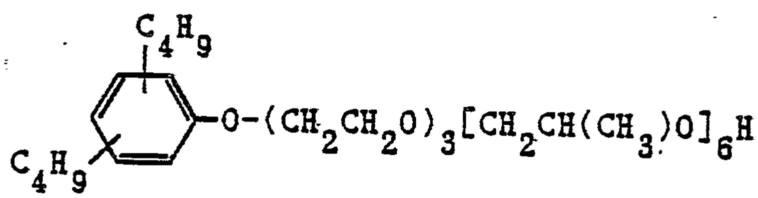

[The two t-butyl groups on the phenyl group are in 2,4- and 2,6-positions (1:1)]

16:

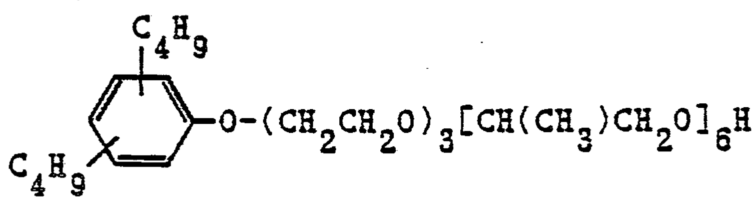

[The two t-butyl groups on the phenyl group are in 2,4- and 2,6-positions (1:1)]

Production Example I

A I-liter autoclave is charged with 282 g of phenol and I.4 g of sodium hydroxide as a catalyst. While introducing nitrogen gas into the autoclave, the temperature is gradually raised and dehydration is effected at I00-II0°C for about 30 minutes. Then, while keeping the autoclave airtight, 522 g of propylene oxide is charged into the autoclave under pressure at a temperature of I00-I60°C and the addition reaction is carried out for about 3 hours. Thereafter, the reaction mixture is aged at the same temperature for 30 minutes. The autoclave is then cooled and opened, the contents are neutralized and the product is purified to give 765 g of a mixture of Compound I and Compound 2 (95:5) as a pale yellow liquid.

Production Example 2

In the same manner as Production Example I, 2I6 g of a mixture of meta-cresol and para-cresol (60:40) is reacted with 696 g of propylene oxide in the presence of I.I g of sodium hydroxide to give 832 g of a mixture of Compound 3 and Compound 4 (96:4).

Production Example 3

In the same manner as Production Example l, 80 g of 2,4-dimethylphenol, 80 g of 2,5-dimethylphenol and 80 g of 3,5-dimethylphenol are reacted with 685 g of propylene oxide in the presence of l.2 g of sodium hydroxide to give 855 g of a mixture of Compound 5 and Compound 6 (96:4).

Production Example 4

A l-liter autoclave is charged with 330 g of p-nonylphenol and l.7 g of sodium hydroxide as a catalyst. While introducing nitrogen gas into the autoclave, the temperature is raised gradually and dehydration is effected at l00-ll0°C for about 30 minutes. After closing the autoclave, 435 g of propylene oxide is charged thereinto at a temperature of l00-l60°C and the addition reaction is carried out for about 3 hours, followed by 30-minute aging at the same temperature. Cooling, opening, neutralization and purification give 708 g of a mixture of Compound 7 and Compound 8 (96:4) as a pale yellow liquid.

Production Example 5

In the same manner as Production Example 4, 250 g of p-nonylphenol is reacted with 593 g of propylene oxide in the presence of l.3 g of sodium hydroxide to give 778 g of a mixture of Compound 9 and Compound l0 (95:5).

Production Example 6

In the same manner as Production Example 1, l88 g of phenol, 0.9 g of sodium hydroxide and 696 g of propylene oxide are used to give 829 g of a mixture of Compound ll and Compound l2 (96:4).

Production Example 7

In the same manner as Production Example 1, l4l g of phenol, 0.7 g of sodium hydroxide and 783 g of propylene oxide are used to give 854 g of a mixture of Compound l3 and Compound l4 (96:4).

Production Example 8

A l-liter autoclave is charged with l00 g of 2,4-di-t-butylphenol, 100 g of 2,6-di-t-butylphenol and 1.0 g of sodium hydroxide. While introducing nitrogen gas into the autoclave, the temperature is raised gradually and dehydration is effected at l00-ll0°C for about 30 minutes. After closing the autoclave, 130 g of ethylene oxide is charged thereinto at a temperature of l00-l60°C and the addition reaction is carried out for about 1 hour. Then, 340 g of propylene oxide is added over about 3 hours and reacted at the same temperature, followed by 30-minute aging at the same temperature. Cooling, opening, neutralization and purification give 616 g of a mixture of Compound l5 and Compound 16 (97:3) as a yellow liquid.

The cement composition according to this invention is a hydraulic cement composition, such as mortars and concretes, in which the compound (I) has been incorporated as a durability-improving agent.

The compound (I) is incorporated into hydraulic cement compositions by a conventional method.

The proportion of the compound (I) in the cement composition according to this invention is 0.l to 8% and preferably l to 6% (weight percent based on cement). If the proportion is less than the above range, no sufficient effect can be obtained. If the range is exceeded, the result will not be better than that obtained within the range and the use of excess amounts is uneconomical.

In general for mortars, an aggregate may be sand or other fine aggregate, and the proportion of fine aggregate is in the range of about 25% to 80% by weight based upon the total weight of the cement composition, depending upon the nature of the aggregate and the required properties and use of the cement composition.

Further in general for concretes, an aggregate may be fine aggregate, such as sand, and coarse aggregate, such as crushed stone or gravel, and the proportion of fine aggregate is in the range of about 20% to 50%, and the proportion of coarse aggregate is in the range of about 35% to 55% by weight based upon the total weight of the cement composition, depending upon the nature of the aggregate and required properties and use of the composition.

For both the mortars and concretes, the amount of water employed generally should be enough to effect hydraulic setting of the cement present in the cement composition and to provide suitable workability. This may range from about 20% to about 70% by weight of the cement in the cement composition for mortars and from about 25% to about 80% by weight of the cement in the cement composition for concretes. The precise amounts of water depend upon the end use of the cement composition, as well as the aggregate and other admixtures present in the cement composition.

Preferred water-cement ratio of the cement composition according to this invention is 20 to 70% for mortars and 25 to 80% for concretes, depending upon required properties and use of the cement composition.

In the cement composition according to this invention, there may be incorporated various water-reducing admixtures such as water-reducing agents (for example, sodium gluconate, lignosulfonate, sulfonated-naphtalene-formaldehyde condensate, sulfonated melamine-formaldehyde condensate, etc.) and air-entraining (AE) agents so as to improve the quality of concrete, etc.

The durability-improving agents according to the invention can be added to concrete in the same manner as the conventional additives. Thus, they may be added to the mixing water beforehand or to a concrete mix once prepared. Further, they may be added after the arrival at the spots of concrete mixes carried by truck mixer agitators. The addition mode to be employed may be decided depending on the durability-improving agent employed, the conditions of the concrete structure, and so forth.

The durability-improving agent according to the invention are never subjected to limitations relative to the kind of cement, the kind of aggregate or the kind of each additive or admixture used combinedly therewith. Thus, they may be added to any kinds of cements that are available on the market, such as ordinary portland cement, high-early-strength cement, moderate heat cement, blast-furnace slag cement, fly ash cement and expansion cement. Such cements may partly be substituted with fly ash, ground blast furnace slag, a siliceous additive and/or the like. Such substitution may lead to achievement of the object of the invention in a favorable manner.

The cement composition according to this invention can be prepared by the following method :

Mortars can be prepared by incorporating the compound (I) in an amount of between 0.1% and 8% by weight based upon the weight of the cement with mortars.

Said mortars may include cement (15-55%), water (5-25%), fine aggregate (35-75%), air entraining agent (0-1% of cement) and/or water-reducing agent (0-5% of cement).

Concretes can be prepared by incorporating the compound (I) in an amount of between 0.1% and 8% by weight based upon the weight of cement with concretes.

Said concretes may include cement (6-30%), coarse aggregate (35-60%), fine aggregate (20-50%), water (6-15%), and air entraining agent (0-1% of cement) and/or water-reducing agent (0-5% of cement).

When the durability-improving agent for cement compositions according to this invention which contains one or more of the compounds of the above general formula (I) is added to hydraulic cement compositions, the rate of carbonation of hardened cement compositions is reduced without any adverse effect on the compression strength of hardened cement compositions, the permeation of water is also reduced and, furthermore, the rate of the invasion of chloride ion is reduced as well. Further, the addition of the compound (I) to a cement composition results in an improved freeze-thaw durability of the cement composition. As a result, the durability of hardened cement compositions is improved and the service life of hardened cement composition can be substantially prolonged. In addition, the compounds of the above general formula (I) have water permeation reducing effect. Therefore, hardened cement compositions containing the compounds of general formula (I) are suited for concrete structures to be exposed to high hydraulic or pneumatic pressure (e.g. marine concrete structures, dams, tanks for LNG, etc.).

The effects and working examples of this invention are explained by way of the following test examples.

Test Example I (Mortar carbonation test)

The compounds of the above general formula (I) as specified below in Table 2 were each added at an addition level specified in Table 2 (on the cement weight basis) to a mortar having the composition shown in Table I ("Plain" means no addition of said compounds). The addition was made by adding the compounds to the mixing water.

Table 1

| Water cement ratio % | Cement sand ratio % | Material used to make $1 m^3$ of mortar ($kg/m^3$) | | |
|---|---|---|---|---|
| | | Cement | Water | Fine aggregate |
| 50 | 50 | 621 | 310 | 1242 |

(The amount of the test compounds was included in the amount of water.)

Prism specimens, 4 cm × 4 cm × 16 cm in size, were made from the mortars, cured in moist air at 20°C for 2 weeks and dried under conditions of 20°C and 60% relative humidity for a week. These specimens were placed in a vessel maintained at a temperature of 30°C and a humidity of 60% (R.H.) in a 5% carbon dioxide gas atmosphere and allowed to stand there for a period specified in Table 2. This test was to accelerate mortar carbonation due to carbon dioxide gas.

After standing for the specified period, each specimen was taken out of the vessel and broken into two approximately in the middle. Each fracture surface was sprayed with an ethanol solution of phenolphthalein (concentration 1%). Where mortar retains alkalinity, the surface assumes a red color while the carbonated surface portion remains unchanged in color. By this method, the depth of carbonation was measured on said fracture surface.

The measurement results thus obtained are shown in Table 2.

Table 2

| Test compound | Addition level (%) | Depth of carbonation (mm) after 2 weeks | 4 weeks | 8 weeks |
|---|---|---|---|---|
| Plain | 0 | 5.6 | 8.4 | 10.0 |
| Mixture of Compounds 1 and 2 (95:5) as obtained in Production Example 1 | 2 | 3.9 | 6.3 | 6.8 |
| | 4 | 3.2 | 5.2 | 5.5 |
| Mixture of Compounds 3 and 4 (96:4) as obtained in Production Example 2 | 1 | 2.8 | 6.7 | 8.0 |
| | 2 | 2.2 | 7.6 | 9.0 |
| | 4 | 2.2 | 6.7 | 7.0 |
| Mixture of Compounds 5 and 6 (96:4) as obtained in Production Example 3 | 2 | 4.5 | 6.7 | 8.0 |
| | 4 | 3.4 | 5.0 | 6.0 |
| Mixture of Compounds 7 and 8 (96:4) as obtained in Production Example 4 | 2 | 3.9 | 6.3 | 8.8 |
| | 4 | 3.9 | 6.1 | 7.8 |
| Mixture of Compounds 9 and 10 (95:5) as obtained in Production Example 5 | 2 | 4.5 | 6.7 | 7.8 |
| | 4 | 4.5 | 6.5 | 7.0 |

Test Example 2 (Concrete carbonation test)

Prism specimens, 10 cm × 10 cm × 40 cm in size, were made from the concrete mixes having compositions specified in Table 3. Subsequently, the procedure of Test Example I was followed and the depth of surface carbonation was measured. The measurement results obtained are shown in Table 4.

Table 3

| Concrete | Test compound addition level (%) (on cement weight basis) | Slump (cm) | Air content (%) | Water cement ratio (%) | Materials used to make 1 $m^3$ of concrete ($kg/m^3$) | | | |
|---|---|---|---|---|---|---|---|---|
| | | | | | Water | Cement | Fine aggregate | Coarse aggregate |
| Plain | 0 | 18 | 1 | 60 | 193 | 322 | 765 | 1068 |
| Concrete containing the mixture of Compounds 1 and 2 (95:5) as obtained in Production Example 1 | 4 | 18 | 1 | 60 | 193 | 322 | 765 | 1068 |
| Concrete containing a lignin-derived AE water reducing agent | 0.25 | 18 | 4 | 57 | 171 | 300 | 755 | 1075 |

(The amount of the test compounds was included in the amount of water.)

Fine aggregate: River sand from Oi River, specific gravity 2.62, FM 2.80

Coarse aggregate: Gravel from Oi River, specific gravity 2.66, FM 6.86

Cement: Sumitomo's ordinary portland cement, specific gravity 3.16

Table 4

| Concrete | Depth of carbonation (mm) after | | |
|---|---|---|---|
| | 2 weeks | 4 weeks | 8 weeks |
| Plain | 11.0 | 12.3 | 13.2 |
| Concrete containing the mixture of Compound 1 and 2 (95:5) as obtained in Production Example 1 | 6.2 | 8.1 | 8.6 |
| Concrete containing a lignin-derived AE water reducing agent | 10.5 | 14.3 | 14.8 |

Test Example 3 (Concrete permeability test)

Concrete mixes prepared in the same manner as in Test Example 2 plain; concrete mix containing 2% or 4% of the mixture of Compounds I and 2 (95:5) as obtained in Production Example I; and concrete mix containing 0.25% of a lignin-derived water reducing agent were each cured in moist air at 20°C for 24 hours and then cured in water at 20°C for I4 days. Drying was then conducted for 7 days under conditions of 20°C and 60% R.H. Thereafter, each concrete specimen was tested for permeability by the input method. Thus, the depth of water permeation after 48-hour exertion of a constant hydraulic pressure of I0 kg/cm² on the bottom surface of a cylindrical specimen having a diameter of I50 mm and a height of I50 mm was measured and the diffusion coefficient (water permeability coefficient) was calculated. The results thus obtained are shown in Table 5.

Table 5

| Concrete | Addition level (%) (on cement weight basis) | Average depth of permeation (cm) | Diffusion coefficient (x $10^{-4}$ $cm^2$/sec) |
|---|---|---|---|
| Plain | 0 | 3.72 | 26.0 |
| Concrete containing the mixture of Compounds 1 and 2 (95:5) as obtained in Production Example 1 | 2<br>4 | 1.94<br>1.96 | 7.1<br>7.2 |
| Concrete containing a lignin-derived AE water reducing agent | 0.25 | 3.00 | 16.9 |

Test Example 4 (Mortar test for chloride ion invasion)

Mortars were mixed after addition of the compounds of this invention at specified addition levels to a mortar prepared under the same conditions as used in Test Example I and then cured in formworks for 24 hours. Thereafter, cure was performed for I4 days under conditions of 20°C and I00% R.H., followed by 7-day drying under conditions of 20°C and 60% R.H. The specimens thus obtained were immersed in a saturated aqueous sodium chloride solution for I4 days. After completion of the immersion, each specimen was broken approximately in the middle and the fracture surface was sprayed with a 0.1% aqueous solution of fluorescein sodium and 0.I N aqueous silver nitrate. Upon such spraying, the area of chloride ion invasion changes in color. Therefore, the depth of chloride ion invasion was measured by this method. The results obtained are shown in Table 6.

Table 6

| Test compound | Addition level (%) (on cement weight basis) | Depth of chloride ion invasion (mm) |
|---|---|---|
| Plain | 0 | 13.6 |
| Mixture of Compounds 1 and 2 (95:5) as obtained in Production Example 1 | 2<br>4 | 9.1<br>8.6 |

Test Example 5 (Concrete test for chloride ion invasion)

Concrete mixes prepared in the same manner as in Test Example 2 plain; concrete mix containing 2% or 4% of the mixture of Compounds I and 2 (95:5) as obtained in Production Example I; and concrete mix containing 0.25% of a lignin-derived AE water reducing agent were cured and dried under the same conditions as used for mortars in Test Example 4, and the same chloride ion invasion test as conducted with mortars in Test Example 4 was carried out. The results obtained are shown in Table 7.

Table 7

| Concrete | Addition level (%) (on cement weight basis) | Depth of chloride ion invasion (mm) |
|---|---|---|
| Plain | 0 | 27.1 |
| Concrete containing the mixture of Compounds 1 and 2 (95:5) as obtained in Production Example 1 | 2<br>4 | 22.8<br>20.0 |
| Concrete containing a lignin-derived AE water reducing agent | 0.25 | 34.4 |

As is evident from the above test examples, the rate of carbonation of hardened cement compositions containing the compounds of the above general formula (I) is slower as compared with that of hardened cement compositions without addition of said compounds. Addition of said compounds also results in lower water permeability and further in slower rates of chloride ion invasion. Therefore, the corrosion of steel can be reduced or inhibited through the reduction in the rate of cabonation in hardened cement compositions, for example in reinforced concrete, or through the reduction of permeation of harmful substances such as salts.

Test Example 6 (Concrete freeze-thaw resistance test and compressive strength test)

(I) Concrete test conditions:

The concrete test was performed in accordance with JIS A 6204 Chemical Admixtures for Concrete. The cement used was ordinary portland cement (a mixture of equal amounts of Onoda cement, Asano cement and Sumitomo cement; specific gravity 3.16); the fine aggregate was Fuji river sand (FM = 2.66, specific gravity 2.64); and the coarse aggregate was Kasama crushed stone (Maximum size = 20 mm, FM = 6.69, specific gravity 2.66).

Mixing and cure were carried out at 20°C. A plain concrete was designed with 320 kg/m$^3$ of cement amount, and a slump of 18 cm. All test mixtures were formulated according to the same mix proportion as the plain concrete.

The test compounds mentioned below in the table were respectively added to mixing water at the indicated concentrations (weight percents based on cement).

Specimens for the freeze-thaw test were prepared to a uniform size of 10 × 10 × 40 cm in accordance with JIS A 1132. In an early stage of hardening prior to water cure and a comparatively advanced stage of hardening after water cure, each specimen was allowed to stand in a room and dry in the same way as a field structure would dry. Thus, 20 hours after mixing, the forms were removed and the specimens were

allowed to stand in a room at 20°C and 60 ± 5% R.H. for 0, 6 and 24 hours. Then, the specimens were water-cured till the age of 2 weeks and immediately subjected to the freeze-thaw test (Table 8). Or, after removal of forms and water-cure till the age of 2 weeks, the specimens were allowed to stand in a room under the above conditions for 0, 2 and 4 days and, then, submitted to the freeze-thaw test (Table 9). The freeze-thaw test was conducted in accordance with JIS A 6204, Appendix 2. Thus, the freeze-thaw cycle of + 5°C to -18°C was repeated with a cycle time of about 3.5 hours per cycle and the relative dynamic modulus of elasticity was determined at 25-cycle intervals. In accordance with JIS A 1127, the relative dynamic modulus of elasticity was calculated from the primary resonance frequency number of deflection frequency by means of the following equation.

$$\text{Relative dynamic modulus of elasticity (\%)} = \frac{fn^2}{fo^2} \times 100$$

fn: the primary resonance frequency of the specimen in each cycle

fo: The primary resonance frequency before initiation of the freeze thaw test

Specimen for the compressive strength test were prepared to the size of 10 (dia.) x 20 cm in accordance with JIS A 1132. Capping was performed on day 1 of age and removal of forms on day 2, followed by water cure at 20°C. The 28-day and 7-day compressive strengths were measured in accordance with JIS A 1108.

(2) Results

The results are set forth below in Tables 8 and 9.

Table 8 (Left standing after removal of forms)

| Test compound | Level of addition (%) | Standing time | Relative dynamic modulus of elasticity (%) 0 cycle | 25 | 50 | 75 | 100 | 125 | 150 | 175 | 200 | Compressive strength ($kgf/cm^2$) 7-day | 28-day |
|---|---|---|---|---|---|---|---|---|---|---|---|---|---|
| Plain | 0 | 0 | 100 | Collapsed | | | | | | | | 196 | 313 |
| | | 6 | 100 | Collapsed | | | | | | | | | |
| | | 24 | 100 | Collapsed | | | | | | | | | |
| Mixture of compounds 3 and 4 in Production Example 2 (96:4) | 2 | 0 | 100 | 50 | | | | | | | | 197 | 317 |
| | | 6 | 100 | 70 | 55 | | | | | | | | |
| | | 24 | 100 | 94 | 92 | 86 | 84 | 78 | 75 | 68 | 60 | | |
| | 4 | 0 | 100 | 70 | 43 | | | | | | | 209 | 320 |
| | | 6 | 100 | 95 | 91 | 90 | 88 | 87 | 86 | 85 | 85 | | |
| | | 24 | 100 | 96 | 95 | 93 | 95 | 94 | 94 | 93 | 93 | | |

Table 9 (Left standing after cure)

| Test compound | Level of addition (%) | Standing day | Relative dynamic modulus of elasticity (%) 0 cycle | 25 | 50 | 75 | 100 | 125 | 150 | 175 | 200 | Compressive strength ($kgf/cm^2$) 7-day | 28-day |
|---|---|---|---|---|---|---|---|---|---|---|---|---|---|
| Plain | 0 | 0 | 100 | Collapsed | | | | | | | | 196 | 313 |
| | | 2 | 100 | 60 | Collapsed | | | | | | | | |
| | | 4 | 100 | 95 | 75 | 53 | | | | | | | |
| Mixture of compounds 1 and 2 in Production Example 1 (95:5) | 1 | 0 | 100 | 70 | 40 | | | | | | | 198 | 315 |
| | | 2 | 100 | 97 | 95 | 84 | 80 | 65 | 40 | | | | |
| | | 4 | 100 | 98 | 98 | 98 | 90 | 85 | 57 | | | | |
| | 2 | 0 | 100 | 60 | | | | | | | | 201 | 312 |
| | | 2 | 100 | 98 | 97 | 98 | 96 | 95 | 94 | 90 | 85 | | |
| | | 4 | 100 | 99 | 97 | 98 | 96 | 95 | 93 | 93 | 92 | | |
| | 4 | 0 | 100 | 80 | 65 | | | | | | | 195 | 317 |
| | | 2 | 100 | 99 | 98 | 94 | 93 | 92 | 92 | 90 | 90 | | |
| | | 4 | 100 | 98 | 98 | 96 | 98 | 96 | 94 | 93 | 94 | | |
| Mixture of compounds 11 and 12 in Production Example 6 (96:4) | 4 | 0 | 100 | 58 | | | | | | | | 197 | 315 |
| | | 2 | 100 | 98 | 94 | 80 | 66 | 57 | 48 | | | | |
| | | 4 | 100 | 99 | 98 | 87 | 97 | 96 | 96 | 96 | 93 | | |
| Mixture of compounds 13 and 14 in Production Example 7 (96:4) | 4 | 0 | 100 | 61 | | | | | | | | 199 | 318 |
| | | 2 | 100 | 86 | 70 | 57 | 43 | | | | | | |
| | | 4 | 100 | 87 | 97 | 98 | 97 | 97 | 98 | 99 | 97 | | |
| Mixture of compounds 3 and 4 in Production Example 2 (96:4) | 4 | 0 | 100 | 60 | | | | | | | | 209 | 320 |
| | | 1 | 100 | 95 | 92 | 83 | 85 | 86 | 84 | 83 | 85 | | |
| | | 2 | 100 | 98 | 97 | 94 | 96 | 96 | 94 | 97 | 96 | | |
| | | 3 | 100 | 98 | 98 | 97 | 97 | 98 | 97 | 97 | 97 | | |

| Test compound | Level of addition (%) | Standing day | Relative dynamic modulus of elasticity (%) 0 cycle | 25 | 50 | 75 | 100 | 125 | 150 | 175 | 200 | Compressive strength ($kgf/cm^2$) 7-day | 28-day |
|---|---|---|---|---|---|---|---|---|---|---|---|---|---|
| Mixture of compounds 5 and 6 in Production Example 3 (96:4) | 4 | 0 | 100 | 55 | | | | | | | | 204 | 309 |
| | | 2 | 100 | 68 | 40 | | | | | | | | |
| | | 4 | 100 | 98 | 99 | 98 | 97 | 97 | 95 | 93 | 88 | | |
| Mixture of compounds 15 and 16 in Production Example 8 (97:3) | 4 | 0 | 100 | 50 | | | | | | | | 190 | 306 |
| | | 2 | 100 | 75 | 55 | | | | | | | | |
| | | 4 | 100 | 98 | 98 | 98 | 97 | 98 | 98 | 97 | 98 | | |

It will be apparent from Table 8 that compounds of the general formula (I) improve the durability of hydraulic cement compositions under freeze-thaw conditions depending upon the amount of the compounds used without any adverse effects on compressive strengths. It is also clear that a brief standing time interposed either in an early stage of hardening or in a comparatively advanced stage of hardening of the hydraulic cement mixture contributes further to the above effect.

Working examples of this invention are as follows:

Example I

| | ($kg/m^3$) |
|---|---|
| Ordinary portland cement | 317 |
| Water | 182 |
| Sand | 765 |
| Gravel | 1027 |
| Compound 1 | 12.7 |

The above materials are mixed to give a concrete.

Example 2

| | ($kg/m^3$) |
|---|---|
| Ordinary portland cement | 317 |
| Water | 182 |
| Sand | 765 |
| Gravel | 1027 |
| Compound 2 | 12.7 |

The above materials are mixed to give a concrete.

## Claims

I. A durability-improving agent for hydraulic cement compositions which comprises one or more of the compounds of the general formula:

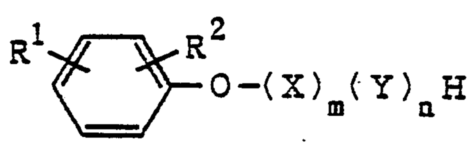

(I)

wherein $R^1$ and $R^2$ each independently s a hydrogen atom or an alkyl group, X is a group of the formula $-CH_2CH_2O-$, Y is a group of the formula $-CH_2CH(CH_3)O-$or a group of the formula $-CH(CH_3)CH_2O-$, m is an integer of 0 or 1-4, n is an integer of not less than 1, the sum m + n is an integer of 1-30, and X and Y are

arranged in an optional order.

2. A hydraulic cement composition comprising a hydraulic cement, sufficient water to effect hydraulic setting of the cement and a compound of the compound (I) of claim I in an amount of between 0.I% and 8% by weight based upon the weight of the cement, whereby the durability of said cement composition is improved.

3. A hydraulic cement composition comprising a hydraulic cement, aggregate in an amount of up to 90% by weight based upon the total weight of said cement composition, sufficient water to effect hydraulic setting of the cement, and a compound of the compound (I) of claim I in an amount of between 0.I% and 8% by weight based upon the weight of the cement, whereby the durability of said cement composition is improved.

4. A method for improving durability of hydraulic cement composition which include hydraulic cement, aggregate in an amount of up to 90% by weight based upon the total weight of said cement compositions, and sufficient water to effect hydraulic setting of the cement, comprising incorporating a compound of the compound (I) of claim I in an amount of between 0.I% and 8% by weight based upon the weight of the cement, whereby the durability of said cement composition is improved.

5. Use of the compound (I) of claim I as a durability-improving agent for a preparation of cement compositions.

6. A method for inhibiting the carbonation of hydraulic cement compositions which include hydraulic cement, aggregate in an amount of up to 90% by weight based upon the total weight of said cement compositions, and sufficient water to effect hydraulic setting of the cement, comprising incorporating a compound of the compound (I) of claim I in an amount of between 0.I% and 8% by weight based upon the weight of the cement, whereby the carbonation of said cement composition is inhibited.

7. A method for inhibiting the invasion of chloride ion into hydraulic cement compositions which include hydraulic cement, aggregate in an amount of up to 90% by weight based upon the total weight of said cement compositions, and sufficient water to effect hydraulic setting of the cement, comprising incorporating a compound of the compound (I) of claim I in an amount of between 0.I% and 8% by weight based upon the weight of the cement, whereby the invasion of chloride ion into said cement composition is inhibited.

8. A method for improving freeze-thaw durability of hydraulic cement compositions which include hydraulic cement, aggregate in an amount of up to 90% by weight based upon the total weight of said cement compositions, and sufficient water to effect hydraulic setting of the cement, comprising incorporating a compound of the compound (I) of claim I in an amount of between 0.I% and 8% by weight based upon the weight of the cement, whereby the freeze-thaw durability said cement composition is improved.

9. Use of the compound (I) of claim I as a carbonation inhibitor for the preparation of cement compositions.

I0. Use of the compound (I) of claim I as a freeze-thaw durability-improving agent for the preparation of cement compositions.

II. A durability-improving agent of claim I, wherein the compound (I) is a compound in which $R^1$ and $R^2$ are each hydrogen, m is 3 and n is 0.

I2. A hydraulic composition of claims 2 and 3, wherein the compound (I) is a compound in which $R^1$ and $R^2$ are each hydrogen, m is 3 and n is 0.

I3. A method of claims 4 and 6 to 8, wherein the compound (I) is a compound in which $R^1$ and $R^2$ are each hydrogen, m is 3 and n is 0.

I4. Use of claims 5, 9 and I0, wherein the compound (I) is a compound in which $R^1$ and $R^2$ are each hydrogen, m is 3 and n is 0.

I5. The use of claim 5, characterized in that the hydraulic cement composition contains 0.I% to 8% by weight, preferably 0.5% to 5% by weight most preferably 3% to 5% by weight, based upon the weight of the cement, of the compound (I) of claim I.

I6. The use of claim I5, wherein the compound (I) is a compound in which $R^1$ and $R^2$ are each hydrogen, m is 3 and n is 0.

I7. A process for preparing a hydraulic cement composition comprising incorporating, as a durability-improving agent for the cement composition, a compound of the compound (I) of claim I in an amount of between 0.I% and 8% by weight based upon the weight of the cement, whereby the durability of said cement composition is improved.

18. A process for preparing hydraulic cement compositions which include hydraulic cement, aggregate in an amount of up to 90% by weight based upon the total weight of said cement compositions, and sufficient water to effect hydraulic setting of the cement, comprising incorporating a compound of the compound (I) of claim 1 in an amount of between 0.1% and 8% by weight based upon the weight of the cement, whereby the durability of said cement composition is improved.

19. A process of claims 17 or 18, wherein the compound (I) is a compound in which $R^1$ and $R^2$ are each hydrogen, m is 3 and n is 0.

European Patent Office

# EUROPEAN SEARCH REPORT

Application number: EP 87104781.7

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| D,X | JP - A - 59-232 952 (TAKENAKA KOMUTEN KK & NIPPON NYUKAZAI KK) * Totality * -- | 1-19 | C 04 B 24/32<br>C 04 B 24/02 |
| X | DE - A - 2 050 084 (CHEMISCHE WERKE HULS AG) * Totality * -- | 1-19 | |
| A | JP - A - 59-14 986 (TOYO INK MFG KK & NIPPON NYUKAZAI KK) * Totality * ---- | 1-19 | |

TECHNICAL FIELDS SEARCHED (Int. Cl 4): C 04 B

The present search report has been drawn up for all claims

| Place of search | Date of completion of the search | Examiner |
|---|---|---|
| VIENNA | 10-07-1987 | BECK |

**CATEGORY OF CITED DOCUMENTS**

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document

EPO Form 1503 03 82